# EUROPÄISCHE PATENTSCHRIFT

(11) **EP 1 202 051 B1**
(45) Veröffentlichungstag und Bekanntmachung des Hinweises auf die Patenterteilung: **04.12.2013**
(21) Anmeldenummer: 01123926.6
(22) Anmeldetag: 06.10.2001
(51) Int. Cl.: G01N 27/74

(54) **Vorrichtung zum Messen der Sauerstoffkonzentration in Gasen unter der Verwendung eines inhomogenen magnetischen Felds**
Apparatus for measuring the oxygen concentration in a gas using an inhomogeneous magnetic field
Dispositif de mesure de la concentration d'oxygène dans des gaz utilisant un champ magnétique inhomogène

(30) Priorität: 27.10.2000 DE 10053314
(43) Veröffentlichungstag der Anmeldung: 02.05.2002
(73) Patentinhaber: ABB Research Ltd., 8050 Zürich (CH)
(72) Erfinder: Vogel, Albrecht, Dr., 76297 Stutensee (DE); Binz, Dieter, Dr., 69493 Hirschberg (DE); Wetzko, Manfred, Dr., 69259 Wilhelmsfeld (DE); Krippner, Peter, Dr., 76199 Karlsruhe (DE)
(74) Vertreter: Miller, Toivo

(56) Entgegenhaltungen:
- EP-A- 0 926 490
- DE-A- 2 301 825
- DE-C- 4 201 216
- JP-A- 61 253 456
- US-A- 2 744 234
- US-A- 3 714 557
- US-A- 5 279 162
- US-A- 5 932 794

## Beschreibung

Die Erfindung bezieht sich auf eine Vorrichtung zum Messen des Sauerstoffgehalts in Gasen gemäß dem Oberbegriff des Patentanspruchs 1.

Eine solche Vorrichtung kommt beispielsweise in der chemischen Verfahrenstechnik zur Anwendung.

Aus der DE-A-230 18 25 sind ein Verfahren und eine Vorrichtung bekannt, welche die paramagnetischen Eigenschaften des Sauerstoffs zur Messung seiner Konzentration in einem Gasgemisch nutzen. Hierfür werden zwei Magnete im Abstand voneinander so angeordnet, dass zwischen ihnen ein Spalt definierter Größe verbleibt. Durch das Magnetfeld, das sich in dem Spalt ausbildet, wird der Sauerstoff dort konzentriert. Innerhalb dieses Spalts ist eine Messvorrichtung mit einem Sensor angeordnet. Der Sensor hat die Form einer Hantel. Er ist so gehaltert, dass er um eine Achse, die in seinem Schwerpunkt liegt, gedreht werden kann. Der Sensor ist zudem so in dem Spalt gehaltert, dass seine Längsachse parallel zur Längsachse des Spalts ausgerichtet ist. Der Sensor wird, da die Sauerstoffkonzentration innerhalb des Spalts gegenüber der Umgebung erhöht ist, aus dem Spalt gedrängt. Die resultierende Auslenkung des Sensors ist ein Maß für die Sauerstoffkonzentration. Mit Hilfe eines Spiegels, der an dem Sensor angebracht ist, so wie einer Lichtwaage, die außerhalb des Spalts angeordnet ist, ist eine sehr genaue Lagedetektion des Sensors möglich. Auf der Oberfläche des Sensors ist eine Spule angeordnet, die am Rand der Spule rundum geführt ist. Mit Hilfe eines Stroms, der durch die Spule geleitet wird, kann eine Rückstellkraft erzeugt werden, mit welcher der Sensor wieder in seine Ruhelage zurück gebracht werden kann. Mit Hilfe der Lichtwaage wird das Erreichen der Ruhelage ermittelt. Die Größe des Stroms, der zum Erzeugen der Rückstellkraft erforderlich ist, wird zur Ermittlung der Sauerstoffkonzentration genutzt. Zwischen der Größe dieses Stroms und der Sauerstoffkonzentration in dem Spalt besteht ein linearer Zusammenhang. Als weiterer Meßwert wird die Größe des Stroms genutzt, der erforderlich ist, um den Sensor aus der ausgelenkten Position in die Ruhelage zurück zu bringen, wenn kein Sauerstoff im Gasgemisch enthalten ist.

US5932794 offenbart eine Sauerstoffwaage mit einem hantelförmigen Sensorelement aus Silizium.

EP0926490 offenbart eine Sauerstoffwaage, bei der das hantelförmige Sensorelement an einem Rahmen befestigt ist.

Die Ansprechzeiten der Vorrichtung sind sehr lang, da die Trägheit des Sensors auf Grund seiner baulichen Konstruktion sehr groß ist. Da der gesamte Aufbau der Vorrichtung sehr groß ist, ist auch die Menge des Gases in der Messkammer, in welcher die Vorrichtung angeordnet ist, sehr groß. Der Austausch des Gases dauert entsprechend lang. Er kann auch nicht durch eine höhere Strömungsgeschwindigkeit beschleunigt werden, da diese die Auslenkung des Sensors beeinflußt und somit zu Messfehlern führt.

Der Erfindung liegt die Aufgabe zugrunde, eine Vorrichtung der eingangs genannten Art aufzuzeigen, die einen minimierten Aufbau und sehr kurze Ansprechzeiten aufweist.

Diese Aufgabe wird durch die Merkmale des Patentanspruchs 1 gelöst.

Die erfindungsgemäße Messvorrichtung ist mit einem Sensor versehen, der sehr kleine Abmessungen aufweist, und innerhalb eines Rahmens drehbar gehaltert ist. Der Rahmen wird innerhalb eines Spalts angeordnet, der zwischen zwei Anordnungen ausgebildet ist, mit denen in dem Spalt ein Magnetfeld erzeugen werden kann. Der Sensor kann durch einen quaderförmigen Körper alleine oder einen quaderförmigen Körper, an dem ein stegförmiges Bauelement befestigt ist, gebildet werden. Vorzugsweise hat der Sensor die Form einer Hantel und wird durch zwei quaderförmige Körper gebildet, die über ein stegförmiges Bauelement miteinander verbunden sind. Das stegförmige Bauelement ist mittig über zwei Halteelemente drehbar in dem Rahmen gehaltert. Der Sensor, der Rahmen und die Halteelemente werden aus Silizium gefertigt. Damit ist es möglich, alle diese Bauelemente mittels Ätztechniken herzustellen. Durch das Verwenden von Photolithographie zur Strukturierung der Ätzmaske wird eine kostengünstige Massenproduktion des Sensors ermöglicht.

Gleichzeitig können sehr enge Toleranzen der Sensoreigenschaften wie Empfindlichkeit und Offset erreicht werden. Zum Schutz des Siliziums vor korrosiven Gasen werden alle Oberflächen, die Kontakt zur Gasatmosphäre haben, mit Schutzschichten wie Siliziumkarbid, Siliziumnitrid oder Siliziumoxid beschichtet.

Die Halterung des Sensors erfolgt mittels federnder Halteelemente. Diese sind so mit dem Rahmen verbunden, dass sie eine Drehung des Sensors um dessen Mittelachse ermöglichen. Die Abmessungen des Sensors sind im Vergleich zu bekannten Aufbauten stark reduziert. Diese Miniaturisierung des Sensors ermöglicht eine Reduzierung des Messgasvolumens. Der Austausch des Messgases kann dadurch schneller erfolgen, selbst wenn die Strömungungsgeschwindigkeit reduziert wird. Das ermöglicht kürzere Ansprechzeiten und eine Reduzierung der Messfehler, da Störungen durch die Einwirkung des strömenden Gases auf den Sensor fast vollständig ausgeschlossen sind. Bei reduzierten Anforderungen an die Ansprechzeiten kann auf eine Beströmung des Sensors vollständig verzichtet werden. Der Gasaustausch erfolgt dann durch Diffusion, ohne jeglichen negativen Einfluss auf den Sensor.

Durch die Verringerung der Sensorhöhe kann der Abstand zwischen den Anordnungen, die das Magnetfeld erzeugen, reduziert werden. Hierdurch wird die Magnetfeldstärke im Spalt vergrößert, und somit auch eine größere Anreicherung von Sauerstoff innerhalb des Spalts erzielt, so dass die Empfindlichkeit des Sensors wesentlich verbessert wird. Auf der Oberfläche des Sensors ist wenigstens eine Leiterbahn ausgebildet. Durch sie kann ein Strom veränderbarer Größe geleitet werden. Mit Hilfe dieses Stroms wird die Kraft erzeugt, die notwendig ist, um die Auslenkung des Sensors zu kompensieren, die er durch die Konzentration des Sauerstoffs in dem Magnetfeld erfährt. Die Leiterbahn wird durch Aufdampfen und Ätzverfahren auf dem Sensor strukturiert.

Weitere erfinderische Merkmale sind in den abhängigen Ansprüchen gekennzeichnet.

Die Erfindung wird nachfolgend an Hand von schematischen Zeichnungen näher erläutert.

Es zeigen:
Fig. 1 die erfindungsgemäße Messvorrichtung,
Fig. 2 den Sensor der Messvorrichtung gemäß Fig. 1 in Draufsicht
Fig. 3 ein Teilbereich des Sensors mit einfallender und reflektierter Strahlung,
Fig. 4 eine Variante des in Fig. 3 dargestellten Teilbereichs,
Fig. 5 eine weitere Variante des in Fig. 3 dargestellten Teilbereichs.

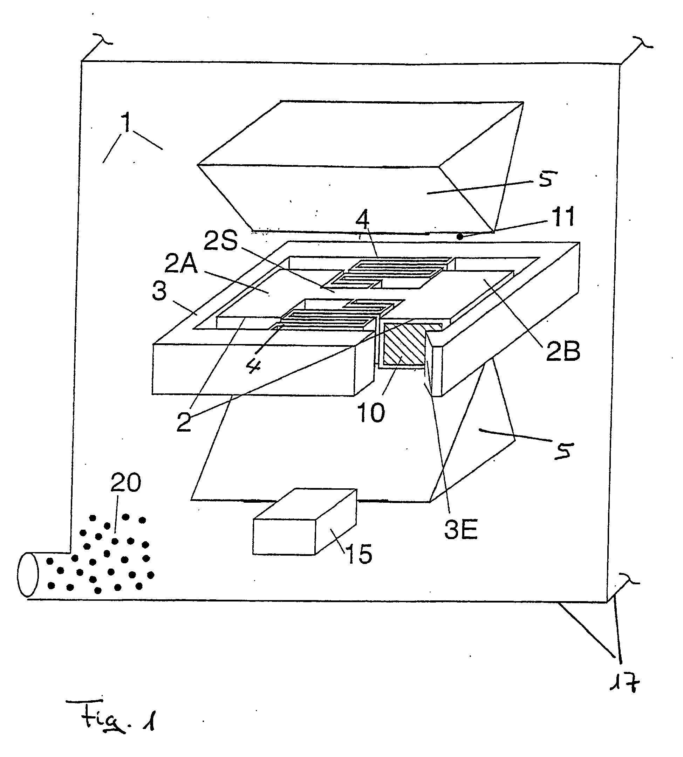

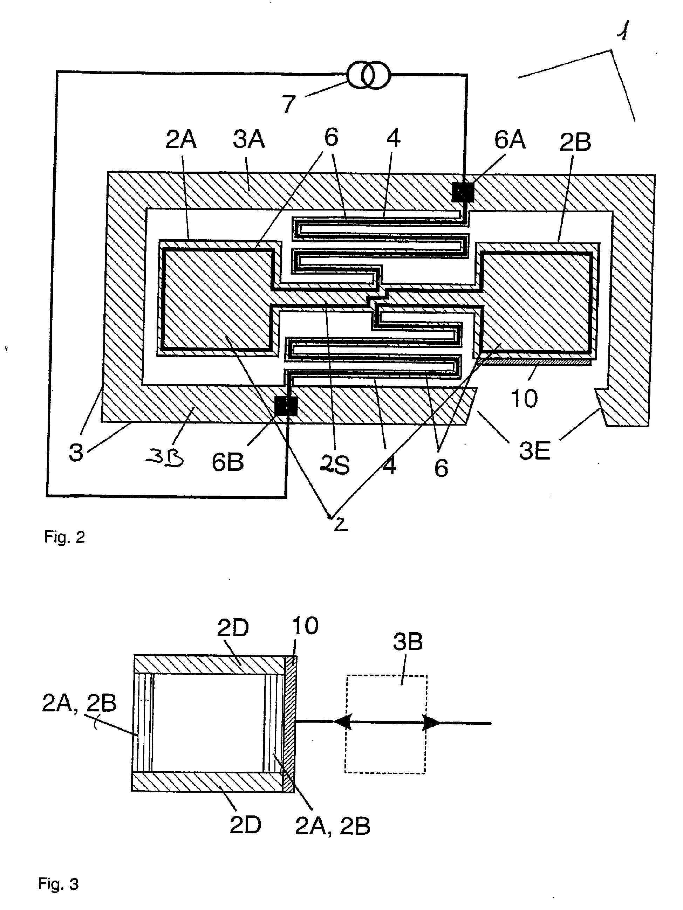

Die in Fig. 1 gezeigte Messvorrichtung 1 umfaßt im wesentlichen einen Sensor 2, einen Rahmen 3, Halteelemente 4, sowie zwei Anordnungen 5 zur Erzeugung eines Magnetfelds. Der Sensor 2, der Rahmen 3 und die Halteelemente 4 werden aus Silizium gefertigt. Damit ist es möglich, die bereits zum Stand der Technik gehörenden Mikrotechniken, Bond- und Ätzverfahren bei der Herstellung der Messvorrichtung 1 anzuwenden. Zum Schutz des Siliziums vor korrosiven Gasen werden alle Oberflächen, die Kontakt zur Gasatmosphäre haben, mit Schutzschichten wie Siliziumkarbid, Siliziumnitrid oder Siliziumoxid beschichtet. Der Sensor 2 wird vorzugsweise mit einer Länge von 2 bis 15 mm, einer Breite von 0,5 bis 3 mm und einer Höhe von 0,1 bis 2 mm ausgebildet. Der Sensor 2 wird vorzugsweise durch zwei gleich große quaderförmige Körper 2A und 2B gebildet, die über eine stegförmiges Bauelement 2S miteinander verbunden sind. Die Höhe der quaderförmigen Körper 2A und 2B entspricht der Höhe des Sensors 2. Die Begrenzungsflächen der Körper 2A und 2B sind quadratisch und haben eine Seitenlänge von 1 mm. Die Seitenflächen können jedoch auch rechteckig ausgebildet sein. Die beiden Körper 2A und 2B sind gleich groß und beide innen hohl. Der Körper 2A, 2B ist in Fig. 3 im Vertikalschnitt dargestellt. Die Wandstärken der Körper 2A und 2B betragen 0,1 mm. Die Wandstärken können jedoch variiert werden, und zwar so, dass der Sensor 2 das jeweils gewünschte Trägheitsmoment aufweist. Für den Fall, dass die Körper 2A und 2B innen hohl sind, werden sie, wie in Fig. 3 dargestellt, oben und unten mit jeweils einem Deckel 2D verschlossen. Die Deckel 2D können aus Glas oder Silizium gefertigt und mit Hilfe eines Bondverfahrens mit dem Körper 2A, 2B verbunden werden.

Die beiden Körper 2A und 2B sind über ein stegförmiges Bauelement 2S so miteinander verbunden, dass der daraus gebildete Sensor 2 die Form einer Hantel aufweist. Die Länge des stegförmigen Bauelements 2S ist so bemessen, dass der Sensor 2 die oben angegebene Gesamtlänge aufweist. Die Breite des stegförmigen Bauelements 2S beträgt bei dem hier dargestellten Ausführungsbeispiel 0,2 mm. Seine Dicke entspricht etwa der Höhe der Körper 2A und 2B ohne Deckel 2D.

Der so ausgebildete Sensor 2 ist, wie Fig. 2 zeigt, im Inneren des Rahmens 3 angeordnet. Die Abmessungen des Rahmens 3 sind so gewählt, dass sich der Sensor 2 um eine Achse drehen kann, die seinen Schwerpunkt senkrecht durchsetzt. Die Auslenkung des Sensors 2 sollte mindestens 30° betragen. Die Höhe des Rahmens 3 ist geringfügig kleiner als die Höhe des Sensors 2. Der Sensor 2 ist an zwei Begrenzungsflächen 3A, 3B des Rahmens 3, die parallel zur Längsachse des stegförmigen Bauelements 2S verlaufen, mit jeweils einem federnden Halteelement 4 befestigt. Die beiden Halteelemente 4 sind als Bänder ausgebildet, die beide meanderförmig angeordnet sind. Alternativ kann auf die mäanderförmige Ausbildung der Bänder verzichtet werden, wenn sich eine ausreichende Rückstellkraft auch mit blattfederartigen Bändern (hier nicht dargestellt) reduzierter Breite einstellen lässt. Jeweils ein Ende eines jeden Halteelements 4 ist fest mit einer Begrenzungsfläche 3A, 3B des Rahmens 3 verbunden, während das zweite Ende eines jeden Halteelements 4 mit dem stabförmigen Bauelement 2S verbunden ist. Die Abmessungen der Halteelemente 4 werden immer auf die Masse des Sensors abgestimmt. An Stelle der Bänder können auch andere federnde Halteelemente 4 zur Befestigung des Sensors 2 verwendet werden, die eine entsprechende Drehung des Sensors innerhalb des Rahmens 3 erlauben.

Wie Fig. 2 ebenfalls zu entnehmen ist, ist auf der Oberfläche des Sensors 2 eine elektrische Leiterbahn 6 ausgebildet, die mit Hilfe eines der bekannten Dünnschichtverfahren hergestellt ist. Die Leiterbahn 6 wird vorzugsweise durch Aufdampfen, Sputtern oder einem galvanischen Verfahren aus einem metallischen Material in Form von Au, Ag, Cu, Pt oder Al gefertigt. Alternativ kann sie auch durch Eindiffusion von Donatoren oder Akzeptoren in das Silizium ausgebildet werden. Jeweils ein elektrisches Anschlusselement 6A, 6B der Leiterbahn 6 ist auf der Oberseite der Begrenzungsfläche 3A, 3B des Rahmens 3 angeordnet. Von dort ist die Leiterbahn 6 über die Oberfläche eines der federnden Halteelemente 4 bis zur Oberfläche des Sensors 2 und entlang des stegförmigen Bauelements 2S bis zum ersten Körper 2A geführt. Die Leiterbahn 6 ist dann am äußeren Rand des Körpers 2A entlang bis zum stegförmigen Bauelement 2S zurück und über dieses hinweg bis zum zweiten Körper 2B geführt. Sie wird dann am Rand des Körpers 2B entlang zum stegförmigen Bauelement 2S zurück geleitet und über das zweite Halteelement 4 zum zweiten elektrischen Anschlusselement 6B geführt. Die beiden Anschlusselemente 6A und 6B können an eine Stromquelle 7 angeschlossen werden. Alternativ kann die Leiterbahn 6 auf der Oberfläche des Sensors 2 auch so ausgebildet sein, dass der in ihr fließende Strom die beiden Körper 2A, 2B gleichsinnig umläuft (hier nicht dargestellt). Das erfordert einen Kreuzungspunkt der Leiterbahn 6, in dem die sich kreuzenden Abschnitte der Leiterbahn (hier nicht dargestellt) dann gegeneinander elektrisch isoliert sind.

Wie an Hand von Fig. 1 zu sehen ist, ist bei dem hier dargestellten Ausführungsbeispiel eine Begrenzungsfläche 3B des Rahmens 3, die parallel zu der Längsachse des Sensor 2 ausgerichtet ist, im Bereich eines Körpers 2B mit einer Öffnung 3E versehen. Der Körper 2B weist auf seiner Seitenfläche, welche dieser Begrenzungsfläche 3B zugewandt ist, eine Beschichtung 10. Diese Beschichtung 10 so ausgebildet, dass sie elektromagnetische Strahlung einer bestimmter Frequenz, vorzugsweise Licht im sichtbaren Bereich, reflektiert. Außerhalb des Rahmens 3 ist eine Vorrichtung 15 installiert. Von dieser Vorrichtung 15 aus wird elektromagnetische Strahlung auf die Beschichtung 10 geleitet. Die von dort reflektierte elektromagnetische Strahlung 16 wird von der Vorrichtung 15 auch wieder empfangen, wie in Fig. 3 dargestellt. Bei einer Lageänderung des Sensors 2 ändert sich das von der Vorrichtung 15 empfangene Signal. Damit ist es möglich, die Lage des Sensors 2 sehr genau zu bestimmen. Alternativ zu einer reflektierende Beschichtung kann auch die Eigenreflexion des Materials genutzt werden, aus dem der Sensor 2 gefertigt ist. Das ist beispielsweise dann der Fall, wenn der Sensor 2 aus Silizium hergestellt ist, und von der Vorrichtung 15 sichtbare elektromagnetische Strahlung 16 emittiert wird.

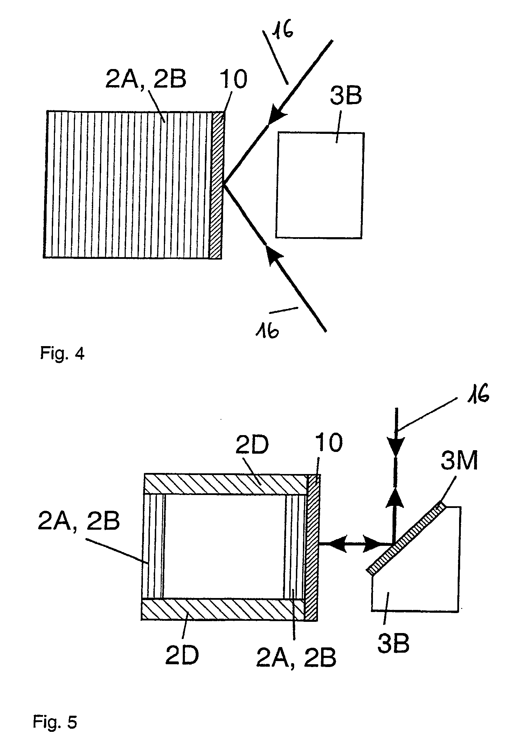

An Stelle der Beschichtung 10 kann auch mit Hilfe einer konkav oder konvex geformten, seitlichen Oberfläche des Körpers 2B ein Spiegel (hier nicht dargestellt) ausgebildet werden. Zugunsten einer vergrößerten mechanischen Stabilität des Rahmens 3 kann auf die Öffnung 3E verzichtet werden, wenn die elektromagnetische Strahlung 16 schräg von oben oder unten auf die Beschichtung 10 gelenkt wird, wie Fig. 4 zeigt. Die Strahlung 16 kann auch über einen Umlenkspiegel 3M auf die reflektierende Seitenfläche des Körpers 2B gelenkt wird. Der Umlenkspiegel 3M ist auf der Innenseite des Rahmens 3 gegenüber der reflektierende Seitenfläche des Körpers 2B angeordnet ist, wie in Fig. 5 dargestellt.

Der Rahmen 3 mit dem darin befindlichen Sensor 2 ist, wie Fig. 1 zeigt, in einem Spalt 11 zwischen den beiden Anordnungen 5 positioniert, die im Abstand voneinander angeordnet sind. Bei dem hier dargestellten Ausführungsbeispiel werden die beiden Anordnungen 5 durch jeweils einen Permanetmagneten gebildet. Die beiden Permanentmagnete haben bei dem hier dargestellten Ausführungsbeispiel beide einen V-förmigen Querschnitt. Alternativ kann dieser Querschnitt auch rechteckig sein. Für die Ausbildung des Magnetfelds können an Stelle der Permanetmagnete jedoch auch Elektromagnete verwendet werden.

Die beiden Permanentmagnete 5 sind so angeordnet, dass ihre Längsachsen parallel zueinander verlaufen, und sie im Falle eines V-förmigen Querschnitts pfeilförmig aufeinander zuweisen. Der Rahmen 3 ist so positioniert, dass die Längsachse des Sensors 2 parallel zu den Längsachsen der Permanentmagnete 5 ausgerichtet ist. Der Abstand zwischen den beiden Anordnungen 5 wird durch die Höhe des Sensors 2 bestimmt. Die Messvorrichtung 1 und die beiden Anordnungen 5 sind in einer Messkammer 17 angeordnet. In diese Messkammer 17 wird das zu untersuchende Gas 20 eingefüllt, dessen Sauerstoffanteil ermittelt werden soll. Ist in dem Gas 20 Sauerstoff enthalten, so wird dieser wegen seiner paramagnetischen Eigenschaft im dem Spalt 11 konzentriert. Durch die höhere Gasdichte in dem Spalt 11 wirkt auf den Sensor 2 eine Kraft, die den Sensor 2 aus dem Spalt 11 zu verdrängen versucht. Der Sensor 2 wird in Abhängigkeit von der Größe dieser Kraft um seinen Aufhängepunkt gedreht. Die Auslenkung wird von der Vorrichtung 15 erfasst. Mit Hilfe der Stromquelle 7, welche an den beiden elektrischen Anschlusselementen 6A und 6B der Leiterbahn 6 angeschlossen ist, wird erreicht, dass in der Leiterbahn 6 ein Strom fließt, der eine Gegenkraft erzeugt. Mit Hilfe eines entsprechend großen Stroms kann der Sensor 2 wieder in sein Ruhelage zurück bewegt werden. Durch eine entsprechende Einstellung der geometrischen Abmessungen der federnden Halteelemente 4 kann erreicht werden, dass die Kraft, die aufgebracht werden muß, um den Sensor 2 auch bei einer maximalen Menge an Sauerstoff in dem Spalt 11 wieder in seine Ruhelage zurück zu führen, einen definierten Wert nicht überschreitet. Das Erreichen der Ruhelage wird mit der Vorrichtung 15 erfasst. Die Größe dieses Stroms wird zur Ermittlung des Sauerstoffanteil in dem Gas 20 verwendet. Als Vergleichsgröße wird die Größe eines Stroms verwendet, der erforderlich ist, den Sensor 2 in sein Ruhelage zurück zubringen, wenn kein Sauerstoff im Spalt 11 konzentriert ist. Hierfür wird die Tatsache genutzt, dass der Sensor durch Montagetoleranzen ein Ruhelage einnimmt, die nicht mit der Nullposition der Vorrichtung 15 übereinstimmt. Die Größe des Stroms, der zur Rückführung des Sensors in diese Nullposition der Vorrichtung 15 erforderlich ist, kann als Vergleichsgröße verwendet werden. Ebenso kann zum Ermitteln einer Vergleichsgröße die Tatsache genutzt werden, dass das Material, das zur Fertigung des Sensors 2 verwendet wird, gegebenenfalls diamagnetisch oder paramagnetisch ist, so dass der Sensor 2 im Magnetfeld eine direkte Kraft erfährt.

Wie in Fig. 4 dargestellt, können die Körper 2A und 2B auch massiv ausgebildet sein. Auf die Deckel 2D kann in diesem Fall verzichtet werden. Auch bei dieser Ausführungsform wird die Masse und damit auch die Größe der Körper 2A und 2B so bemessen, dass der Sensor 2 das gewünschte Trägheitsmoment aufweist.

Bei einer vereinfachten Ausführungsform der Messvorrichtung kann der Sensor 2 auch so ausgebildet sein, dass er nur einen Körper 2A, 2B aufweist, der mit einem stegförmig Bauelement 2S verbunden ist (hier nicht dargestellt). Das freie Ende des stegförmigen Bauelements 2S wird dann über ein oder zwei Halteelemente 4 am Rahmen 3 befestigt, wie bereits oben beschrieben.

Ebenso kann der Sensor (hier nicht dargestellt) auch nur aus einem quaderförmigen Körper bestehen, der massiv oder hohl ausgebildet werden ist, und durch die federnden Halteelemente 4 mittig drehbar im Rahmen 3 gehaltert wird.

## Patentansprüche

1. Messvorrichtung zur Bestimmung des Sauerstoffgehaltes in Gasen (20), mit zwei einen Spalt (11) zwischen sich einschließenden und ein Magnetfeld ausbildenden Anordnungen (5), sowie mindestens einem im Spalt (11) drehbar gehalterten Sensor (2), der in Abhängigkeit von der Konzentration des Sauerstoffes aus seiner Ruhelage auslenkbar ist, und dass innerhalb des Spalts (11) ein Rahmen (3) zur Aufnahme und beweglichen Halterung des Sensors (2) über wenigstens ein federndes Halteelement (4) angeordnet ist, wobei der Sensor (2) im Inneren des Rahmens (3) angeordnet ist und Sensor (2), Rahmen (3) sowie das wenigstens eine Halteelement (4) aus Silizium gefertigt sind und auf der Oberfläche des Sensors (2) wenigstens eine Leiterbahn ausgebildet ist, durch welche ein Strom veränderbarer Größe leitbar ist, mit welchem eine Kraft erzeugbar ist, um die Auslenkung des Sensors aufgrund der Sauerstoffkonzentration im Magnetfeld zu kompensieren, sowie eine Vorrichtung (15) zur Lagebestimmung des Sensors (2) vorgesehen ist.

2. Messvorrichtung, nach Anspruch 1, **dadurch gekennzeichnet, dass** der Sensor (2) wenigstens einen quaderförmigen Körper (2A, 2B) aufweist, der hohl oder massiv ausgebildet und mit einem stegförmigen Bauelement (2S) verbunden ist, das über das wenigstens eine federnde Halteelement (4) innerhalb des Rahmens (3) beweglich befestigt ist.

3. Messvorrichtung, nach Anspruch 1, **dadurch gekennzeichnet, dass** der Sensor (2) aus einem quaderförmigen Körper (2A, 2B) besteht, der hohl oder massiv ausgebildet ist und über das wenigstens eine federnde Halteelement (4) innerhalb des Rahmens (3) beweglich gehaltert ist.

4. Messvorrichtung nach Anspruch 1, **dadurch gekennzeichnet, dass** der Sensor (2) zwei quaderförmige Körper (2A, 2B) aufweist, die beide hohl oder massiv ausgebildet und über ein stegförmiges Bauelement (2S) miteinander verbunden sind, dass die Länge des stegförmigen Bauelements (2S) so bemessen ist, dass der Sensor (2) innerhalb des Rahmens (3) drehbar ist, dass das stegförmige Bauelement (3S) mittig über jeweils ein federndes Halteelement (4) an zwei Begrenzungsflächen (3A, 3B) des Rahmens (3) gehaltert ist, die parallel zueinander ausgerichtet sind.

5. Messvorrichtung nach einem der Ansprüche 1 bis 4, **dadurch gekennzeichnet, dass** wenigstens eine der beiden parallel zueinander verlaufenden Begrenzungsflächen (3A, 3B) des Rahmens eine Öffnung (3E) aufweist, über die elektromagnetische Strahlung auf eine reflektierende Beschichtung (10) des Sensors (2) leitbar ist.

6. Messvorrichtung nach einem der Ansprüche 1 bis 5, **dadurch gekennzeichnet, dass** die auf der Oberfläche des Sensors (2) geführte Leiterbahn (6) an eine Stromquelle (7) anschließbar ist, und dass mit einem durch die Leiterbahn (6) hindurch geleitenden Strom eine auf den Sensor (2) wirkenden Rückstellkraft definierter Größe erzeugbar ist.

7. Messvorrichtung nach einem der Ansprüche 1 bis 6, **dadurch gekennzeichnet, dass** das Trägheitsmoment des Sensors (2) über die Wandstärke der quaderförmigen Körper (2A, 2B) einstellbar ist.

8. Messvorrichtung nach einem der Ansprüche 1 bis 7, **dadurch gekennzeichnet, dass** die Auslenkung des Sensors (2) durch die geometrischen Abmessungen der federnden Halteelemente (4) auf einen definierten Wert begrenzbar ist.

9. Messvorrichtung nach einem der Ansprüche 1 bis 8, **dadurch gekennzeichnet, dass** der Sensor (2) eine Länge von 2 bis 15 mm, eine Breite von 0,5 bis 3 mm und eine Höhe von 0,1 bis 2 mm aufweist, und dass der Rahmen (3) eine Innenfläche zwischen 1,5mm² bis 50mm² aufweist.

## Claims

1. Measuring apparatus for determining the oxygen content in gases (20), having two arrangements (5) which enclose a gap (11) and form a magnetic field, and having at least one sensor (2), which is held rotatably in the gap (11) and is deflectable from its rest position in dependence on the concentration of the oxygen, wherein a frame (3) for receiving the sensor (2) and holding it movably via at least one resilient holding element (4) is arranged inside the gap (11), wherein the sensor (2) is arranged in the interior of the frame (3), and sensor (2), frame (3) and the at least one holding element (4) are made of silicon, and at least one conductor track is formed on the surface of the sensor (2), through which conductor track a current of variable magnitude is conductible, with which current a force is producible for compensating the deflection of the sensor due to the oxygen concentration in the magnetic field, and an apparatus (15) for determining the position of the sensor (2) is provided.

2. Measuring apparatus according to Claim 1, **characterized in that** the sensor (2) has at least one cuboid body (2A, 2B), which is configured to be hollow or solid and is connected to a web-shaped component (2S), which is attached movably inside the frame (3) via the at least one resilient holding element (4).

3. Measuring apparatus according to Claim 1, **characterized in that** the sensor (2) consists of a cuboid body (2A, 2B), which is configured to be hollow or solid and is held movably inside the frame (3) via the at least one resilient holding element (4).

4. Measuring apparatus according to Claim 1, **characterized in that** the sensor (2) has two cuboid bodies (2A, 2B), which are both configured to be hollow or solid and are connected to one another via a web-shaped component (2S), **in that** the length of the web-shaped component (2S) is such that the sensor (2) inside the frame (3) is rotatable, **in that** the web-shaped component (2S) is held centrally via a respective resilient holding element (4) on two boundary surfaces (3A, 3B) of the frame (3), which are aligned parallel with respect to one another.

5. Measuring apparatus according to one of Claims 1 to 4, **characterized in that** at least one of the two mutually parallel boundary surfaces (3A, 3B) of the frame has an opening (3E) via which electromagnetic radiation is conductible onto a reflective coating (10) of the sensor (2).

6. Measuring apparatus according to one of Claims 1 to 5, **characterized in that** the conductor track (6) guided on the surface of the sensor (2) is connectable to a current source (7), and **in that** a restoring force of defined magnitude acting on the sensor (2) is producible with a current which is conducted through the conductor track (6).

7. Measuring apparatus according to one of Claims 1 to 6, **characterized in that** the moment of inertia of the sensor (2) is adjustable via the wall thickness of the cuboid body (2A, 2B).

8. Measuring apparatus according to one of Claims 1 to 7, **characterized in that** the deflection of the sensor (2) is limitable to a defined value owing to the geometric dimensions of the resilient holding elements (4).

9. Measuring apparatus according to one of Claims 1 to 8, **characterized in that** the sensor (2) has a length of 2 to 15 mm, a width of 0.5 to 3 mm and a height of 0.1 to 2 mm, and **in that** the frame (3) has an interior surface area of between 1.5 mm² to 50 mm².

## Revendications

1. Dispositif de mesure permettant de déterminer la teneur en oxygène d'un gaz (20) et présentant
deux ensembles (5) enfermant un interstice (11) et formant un champ magnétique et
au moins un capteur (2) maintenu à rotation dans l'interstice (11) et pouvant être sorti de sa position de repos en fonction de la concentration en oxygène,
un cadre (3) destiné à reprendre et à maintenir de manière mobile le capteur (2) par l'intermédiaire d'au moins un élément élastique de retenue (4) étant disposé à l'intérieur de l'interstice (11),
le capteur (2) étant disposé à l'intérieur du cadre (3),
le capteur (2), le cadre (3) ainsi qu'au moins un élément de maintien (4) étant réalisés en silicium,
au moins une piste conductrice par laquelle un courant d'intensité variable peut passer étant formée sur la surface du capteur (2) pour compenser la déviation du capteur dans le champ magnétique en fonction de la concentration en oxygène et
un dispositif (15) de détermination de la position du capteur (2) étant prévu.

2. Dispositif de mesure selon la revendication 1, **caractérisé en ce que** le capteur (2) présente au moins un corps parallélépipédique (2A, 2B) de configuration creuse ou pleine et relié à un composant (2S) en forme de nervure fixé de manière mobile à l'intérieur du cadre (3) par l'intermédiaire du ou des éléments élastiques de retenue (4).

3. Dispositif de mesure selon la revendication 1, **caractérisé en ce que** le capteur (2) présente au moins un corps parallélépipédique (2A, 2B) de configuration creuse ou pleine et maintenu à déplacement à l'intérieur du cadre (3) par l'intermédiaire du ou des éléments élastiques de retenue (4).

4. Dispositif de mesure selon la revendication 1, **caractérisé en ce que** le capteur (2) présente deux corps parallélépipédiques (2A, 2B), tous deux de configuration creuse ou pleine et reliés l'un à l'autre par un composant (2S) en forme de nervure, **en ce que** la longueur du composant (2S) en forme de nervure est dimensionnée de telle sorte que le capteur (2) puisse tourner à l'intérieur du cadre (3), **en ce que** le milieu du composant (2S) en forme de nervure est maintenu sur deux surfaces limites (3A, 3B) du cadre (3) par un élément élastique de retenue (4) respectif et **en ce que** les surfaces limites sont orientées parallèlement l'une à l'autre.

5. Dispositif de mesure selon l'une des revendications 1 à 4, **caractérisé en ce qu'**au moins l'une des deux surfaces limites (3A, 3B) du cadre qui s'étendent parallèlement l'une à l'autre présente une ouverture (3E) par laquelle le rayonnement électromagnétique peut être amené sur un revêtement réfléchissant (10) du capteur (2).

6. Dispositif de mesure selon l'une des revendications 1 à 5, **caractérisé en ce que** la piste conductrice (6) formée sur la surface du capteur (2) peut être raccordée à une source (7) de courant et **en ce qu'**une force de rappel de niveau défini qui agit sur le capteur (2) peut être exercée par un courant conduit par la piste conductrice (6).

7. Dispositif de mesure selon l'une des revendications 1 à 6, **caractérisé en ce que** le moment d'inertie du capteur (2) peut être ajusté par l'intermédiaire de l'épaisseur des parois du corps parallélépipédique (2A, 2B).

8. Dispositif de mesure selon l'une des revendications 1 à 7, **caractérisé en ce que** la déviation du capteur (2) peut être limitée à une valeur définie par les dimensions géométriques des éléments élastiques de retenue (4).

9. Dispositif de mesure selon l'une des revendications 1 à 8, **caractérisé en ce que** le capteur (2) présente une longueur de 2 à 15 mm, une largeur de 0,5 à 3 mm et une hauteur de 0,1 à 2 mm et **en ce que** le cadre (3) présente une surface intérieure comprise entre 1,5 mm² et 50 mm².
